## Europäisches Patentamt

## European Patent Office

## Office européen des brevets

(11) Veröffentlichungsnummer: **0 212 074**
**B1**

(12) # EUROPÄISCHE PATENTSCHRIFT

(45) Veröffentlichungstag der Patentschrift:
08.11.89

(51) Int. Cl.⁴: **B60T 17/22**

(21) Anmeldenummer: 86106630.6

(22) Anmeldetag: **15.05.86**

(54) **Elektrisch gesteuerte Druckmittel-Bremsanlage.**

(30) Priorität: 03.08.85 DE 3527907

(43) Veröffentlichungstag der Anmeldung:
04.03.87 Patentblatt 87/10

(45) Bekanntmachung des Hinweises auf die Patenterteilung:
08.11.89 Patentblatt 89/45

(84) Benannte Vertragsstaaten:
DE FR GB IT NL SE

(56) Entgegenhaltungen:
DE-B- 1 127 388
FR-A- 2 527 154
FR-A- 2 535 273

PATENT ABSTRACTS OF JAPAN, Band 6,
Nr. 242 (M-175)[1120], 30. November 1982; & JP - A
- 57 140 265 (TOYODA KOKI K.K.) 30.08.1982

(73) Patentinhaber: WABCO Westinghouse
Fahrzeugbremsen GmbH, Am Lindener
Hafen 21 Postfach 91 12 80, D-3000 Hannover 91(DE)

(72) Erfinder: Petersen, Erwin, Dr.-Ing., Fliederweg 22,
D-3051 Wunstorf(DE)

(74) Vertreter: Schrödter, Manfred, WABCO Westinghouse
Fahrzeugbremsen GmbH Am Lindener
Hafen 21 Postfach 91 12 80, D-3000 Hannover 91(DE)

## Beschreibung

Die Erfindung bezieht sich auf eine elektrisch gesteuerte Druckmittel-Bremsanlage gemäß dem Oberbegriff des Patentanspruchs 1.

Elektrisch gesteuerte Bremsanlagen befinden sich seit einiger Zeit in der Entwicklung. Gegenüber konventionellen Bremsanlagen ergeben sich durch die elektrische Verarbeitung des Bremssignales Einsparungen an Bremsgeräten und Vorteile im Bremskomfort. Besonders vorteilhaft ist eine elektrische Bremsanlage bei einer Integration weiterer Funktionen, wie lastabhängige Bremse (ALB), Blockierschutz (ABS), Antriebsschlupf-Regelung (ASR), u.s.w. Eine elektrische Bremsanlage der eingangs genannten Art ist aus der DE-A 32 39 970 bekannt.

An alle für die Sicherheit von Personen wichtige Anlagen, wie auch an eine Fahrzeugbremsanlage, müssen besonders hohe Anforderungen in Bezug auf Störungsfreiheit und Zuverlässigkeit gestellt werden. Dies gilt für alle wichtigen Komponenten der Bremsanlage.

Der Erfindung liegt die Aufgabe zugrunde, eine geeignete Anordnung zur Prüfung einer elektrischen Bremsanlage der eingangs genannten Art auf Störungsfreiheit anzugeben.

Diese Aufgabe wird durch die im Patentanspruch 1 enthaltene Erfindung gelöst. Die Unteransprüche enthalten zweckmäßige Weiterbildungen der Erfindung.

Ein besonderer Vorteil der Erfindung ist darin zu sehen, daß durch die Elektronik vor Fahrtantritt nicht nur eine passive, sondern auch eine umfangreiche aktive Prüfung der Bremsanlage durchgeführt wird. Hierzu wird der Fahrer gezwungen, das Bremspedal einmal voll durchzutreten, da er sonst nicht losfahren kann. Die Prüfung erstreckt sich damit auch auf den Bremswertgeber. Vor dem erfolgreichen Ablauf der Prüfung läßt sich die Federspeicher-Bremse nicht lösen.

Die Erfindung wird im folgenden anhand einer Zeichnung näher erläutert. Diese zeigt in

Fig. 1 eine erste Variante der erfindungsgemäßen elektrisch gesteuerten Bremsanlage mit entlüftendem Handbremsgeber und in

Fig. 2 eine zweite Variante mit belüftendem Handbremsgeber.

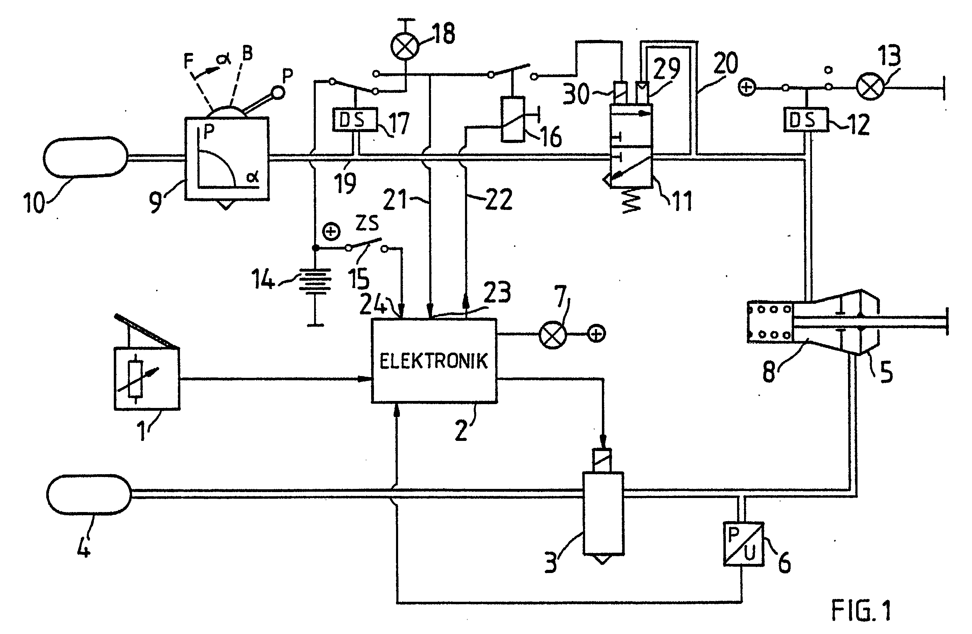

Die elektrisch gesteuerte Bremsanlage nach Fig. 1 weist einen ersten Vorratsbehälter 4 für ein Druckmittel auf, welches über einen Modulator 3 einem Bremszylinder 5 beaufschlagen kann. Der Modulator 3 ist als Magnetventil ausgebildet und wird von einer Elektronik 2 angesteuert. Um eine genaue Regelung des ausgesteuerten Druckes zu ermöglichen, ist eine Druckmessdose 6 vorgesehen, deren elektrisches Ausgangssignal an die Elektronik 2 zurückgeführt wird.

Der Elektronik 2 wird weiter ein Signal eines elektrischen Bremswertgebers 1 (Bremspedal) zugeführt. Der Bremswertgeber 1 enthält beispielsweise einen von der Stellung seiner Trittplatte abhängigen veränderlichen Widerstand.

Für die Feststellbremse ist ein zweiter Vorratsbehälter 10 vorgesehen, der über einen Handbremsgeber 9 und ein Magnetventil 11 an einen Federspeicher 8 angeschlossen ist. Der Handbremsgeber 9 läßt sich in die Positionen F (Fahrt), B (Bremsen) und P (Parken) verstellen. Er ist so ausgebildet, daß für die Stellung F ein hoher, oberhalb des Federspeicherlösedrucks liegender Druck und für die Stellung P der Atmosphärendruck ausgesteuert wird (entlüftender Handbremsgeber). Der ausgesteuerte Druck hinter dem Handbremsgeber 9 in einer Leitung 19 wird durch einen ersten Druckschalter (DS) 17 überwacht. Der Druckschalter 17 verbindet in der (gezeichneten) Stellung, in welcher die Leitung 19 entlüftet ist, den Pluspol einer Batterie 14 mit einer ersten Warnlampe 18.

Es ist weiter ein Relais 16 vorgesehen, welches im eingeschalteten Zustand und im eingeschalteten druckbeaufschlagten Zustand des Druckschalters 17 den Pluspol der Batterie 14 mit einer elektrischen Ansteuerung 30 des Magnetventils 11 verbindet. Der Schaltzustand des Druckschalters 17 wird weiter über eine Leitung 21 einem Eingang 23 der Elektronik 2 mitgeteilt. Die Leitung 21 kann auch rückwirkungsfrei, z.B. über eine (nicht dargestellte) Diode, mit einem Anschluß 24 der Elektronik 2 verbunden sein. Das Relais 16 ist über eine Leitung 22 von der Elektronik 2 ansteuerbar.

Bei belüfteter Leitung 19 und eingeschaltetem, d.h. gegenüber der Zeichnung umgesteuerten Magnetventil 11 geht dieses über eine Leitung 20 und eine pneumatische Ansteuerung 29 in pneumatische Selbsthaltung. Der Druck des Federspeichers 8 wird über einen zweiten Druckschalter (DS) 12 abgefühlt. Bei zu geringem Federspeicherdruck verbindet der zweite Druckschalter 12 den Pluspol der Batterie 14 mit einer zweiten Warnlampe 13.

An die Elektronik 2 ist ferner eine dritte Warnlampe 7 angeschlossen, welche bei Fahrzeugstart und dann angesteuert wird, wenn ein Fehler in der Bremsanlage festgestellt worden ist.

Über einen Zündschalter (ZS) 15 läßt sich die Elektronik 2 über einen Eingang 24 mit Spannung versorgen.

Die oben beschriebene elektrisch gesteuerte Bremsanlage funktioniert wie folgt:

Zum Starten des Fahrzeugs schaltet der Fahrer i.a. zunächst den Zündschalter 15 ein. Hierauf prüft die Elektronik 2 passiv und ggf. auch aktiv die Verkabelung sowie weitere Teile der Bremsanlage. Die Elektronik 2 verhindert jedoch zunächst die Weitergabe eines eventuellen Bremssignals des elektrischen Bremswertgebers 1 an den Modulator 3.

Bei stehendem Fahrzeug ist der Federspeicher 8 eingelegt, also entlüftet, was durch die Warnlampen 13 und 18 angezeigt wird. Das Magnetventil 11 befindet sich in der gezeichneten, entlüftenden Stellung. Die Leitung 19 ist ebenfalls drucklos, da der Handbremsgeber 9 in der Parkstellung steht. Der Druckschalter 17 befindet sich in der gezeichneten Stellung, so daß an dem Eingang 23 der Elektronik 2 kein Signal ansteht. Die Warnlampe 7 wird von der Elektronik 2 angesteuert, da die Prüfung der Bremsanlage noch nicht abgeschlossen ist.

Fahrer den Bremswertgeber 1 voll durchdrücken, d.h. zumindestens zu beispielsweise 80 % betätigen. Hieraufhin führt die Elektronik 2 einen aktiven Test durch, wobei insbesondere der Bremswertgeber 1, der Modulator 3 und der Druck im Bremszylinder 5 bzw. die vom Bremszylinder 5 ausgesteuerte Bremskraft von der Elektronik 2 auf korrekte Werte geprüft werden. Die hierzu notwendigen korrekten Zuordnungen von Trittplattenweg des Bremswertgebers 1 und Druckkraft bzw. Kraftanstieg im Bremszylinder 5 sind in einem (nicht dargestellten) Speicher der Elektronik 2 enthalten.

Falls hieraufhin die Elektronik 2 keinen Fehler feststellt, erlischt die Warnlampe 7, und es wird über die Leitung 22 des Relais 16 angesteuert, d.h. geschlossen.

Als nächstes löst nun der Fahrer den Handbremsgeber 9 (Stellung "Fahrt"), wodurch die Leitung 19 belüftet wird und der Druckschalter 17 umschaltet. Hierdurch erlischt die erste Warnlampe 18, und über die nun bestehende Verbindung zum Pluspol der Batterie 14 schaltet das Magnetventil 11 um. Der Druck in der Leitung 19 pflanzt sich hierdurch zum Federspeicher 8 fort und löst diesen. Gleichzeitig geht das Magnetventil 11 über eine Leitung 20 in pneumatische Selbsthaltung. Weiterhin erlöschen die Warnlampen 13 und 18, was dem Fahrer das Lösen des Federspeichers anzeigt. Der Fahrer kann nun das Fahrzeug in Bewegung setzen.

Anstelle der pneumatischen Selbsthaltung des Magnetventils 11 kann auch eine elektrische Selbsthaltung des Relais 16 vorgesehen sein (nicht dargestellt).

Der Fahrer kann das Fahrzeug auch auf andere Weise starten, indem er zunächst den Handbremsgeber 9 löst, ohne den Zündschalter einzuschalten. Daraufhin bekommt die Elektronik 2 über die Leitung 21 und den Eingang 23 Spannung und ist mindestens in einem Teilbereich betriebsbereit.

Hierauf wird durch die Elektronik 2 zunächst eine Prüfung der Verkabelung durchgeführt.

Als nächstes drückt der Fahrer wiederum den Bremswertgeber 1 voll durch, worauf der oben beschriebene aktive Test durchgeführt wird. Der Fahrer schaltet außerdem den Zündschalter 15 ein. Durch das nun gleichzeitig vorliegende Spannungssignal an den Eingängen 23 und 24 der Elektronik 2 schaltet diese über die Leitung 22 das Relais 16 ein, sofern die Prüfung keinen Fehler festgestellt hat. Hierauf erst löst sich wiederum der Federspeicher 8 und es kann losgefahren werden.

Ist die Leitung 21 wie oben erwähnt über eine Diode rückwirkungsfrei mit dem Anschluß 24 der Elektronik 2 verbunden, kann der aktive Teil mit Bremsbetätigung auch ohne Einschalten des Zündschalters 15 erfolgen.

Der besondere Vorteil der beschriebenen elektrisch gesteuerten Bremsanlage liegt darin, daß die Elektronik 2 redundant zum Zündschalter 15 über den Schalter 17 elektrisch versorgt wird und daß nicht losgefahren werden kann, wenn die elektrische Bremse defekt ist, da der Federspeicher 8 erst dann zu lösen ist, wenn die Bremsanlage mit Erfolg betätigt und geprüft worden ist.

Ein weiterer Vorteil ist darin zu sehen, daß ein z.B. am Hang geparktes Fahrzeug auch bei gelöstem Handbremsgeber 9 und auch mit dem Einschalten des Zündschalters 15 nicht sofort zurückrollt, sondern erst, nachdem die Funktionsfähigkeit der Betriebsbremse geprüft worden ist.

Die Selbsthaltung des Magnetventils 11 über die leitung 20 ist deshalb notwendig, damit bei einem Stromausfall während der Fahrt nicht plötzlich durch das Umschalten des Magnetventils 11 der Federspeicher 8 entlüftet wird und die Bremse automatisch betätigt wird. Durch die Selbsthaltung wird weiter ein Abschleppen des Fahrzeugs auch ohne Stromversorgung ermöglicht.

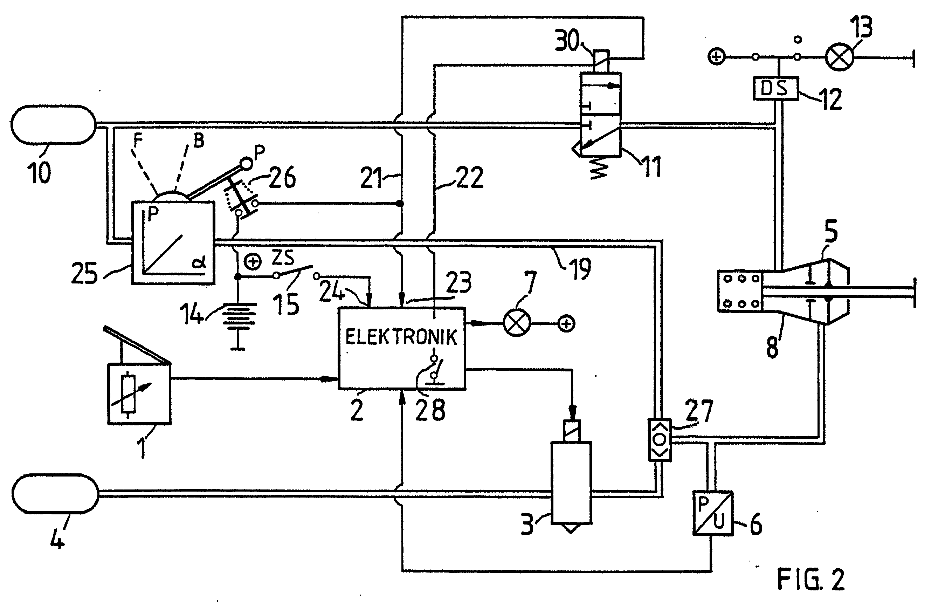

Die Bremsanlage nach Fig. 2 weist im Gegensatz zur Fig. 1 einen belüftenden Handbremsgeber 25 auf, der über ein Wegeventil 27 auf die Betriebsbremse 5 wirkt. Dies gilt für die Bremsstellung (B). Sobald jedoch die Parkstellung (P) erreicht ist, wird anstelle des Druckschalters 17 nach Fig. 1 hier ein Schalter 26 betätigt (ausgeschaltet). Hierdurch wird die elektrische Ansteuerung des Magnetventils 11 aufgehoben. Es schaltet somit in die (gezeichnete) Stellung um, wodurch der Federspeicher 8 entlüftet, d.h. betätigt wird. Die übrigen Elemente entsprechen der Fig. 1.

Anstelle des Relais 16 nach Fig. 1 ist hier eine schaltbare Masseverbindung 28 in der Elektronik 2 vorgesehen, über die und über die Leitung 22 nach erfolgreicher Prüfung der Bremsanlage der Stromkreis zur Ansteuerung des Magnetventils 11 geschlossen wird. Für die Ansteuerung des Magnetventils 11 durch die Elektronik 2 kann eine elektrische Selbsthaltung vorgesehen werden Im übrigen gleicht die Funktionsweise der Bremsanlage nach der Fig. 2 der nach Fig. 1.

Die Einrichtungen nach Fig. 1 und Fig. 2 sind elektrisch einkreisig dargestellt. Für elektrisch zweikreisige Bremsanlagen mit zwei getrennten Stromquellen und Elektronik-Kreisen (nicht dargestellt ) kann die Ansteuerung des Magnetventils 11 sinngemäß zweikreisig, d.h. redundant erfolgen. Dabei können die von den Elektroniken 2 geschalteten Schaltelemente 16, 28 elektrisch in Reihe geschaltet sein, so daß das Magnetventil 11 erst nach positiver Prüfung in beiden Bremskreisen schaltbar ist. Durch die Parallelschaltung der zweikreisigen Schaltelemente 16, 28 kann der Federspeicher 8 schon gelöst werden, wenn nur ein Betriebsbremskreis ordnungsgemäß arbeitet.

**Patentansprüche**

1. Elektrisch gesteuerte Druckmittel-Bremsanlage, mit folgenden Merkmalen:
   a) ein elektrischer Bremswertgeber (1) zur Ansteuerung der Betriebsbremse (5);
   b) ein Handbremsgeber (9, 25) zur Ansteuerung einer Feststellbremse, die über einen Federspeicher (8) und/oder die Betriebsbremse (5) wirkt;
   c) eine Elektronik (2) zur Steuerung der Betriebsbremse (5) über Modulatoren (3);
   d) ein Zündschalter (15) zur Stromversorgung der Elektronik (2),
   gekennzeichnet durch folgende Merkmale:
   e) dem Federspeicher (8) ist ein Magnetventil (11) gekennzeichnet durch folgende Merkmale:

e) dem Federspeicher (8) ist ein Magnetventil (11) vorgeschaltet;

f) das Magnetventil (11) ist durch die Elektronik (2) erst dann in eine den Federspeicher (8) belüftende Stellung steuerbar, wenn die Bremsanlage mit Erfolg durch die Elektronik (2) geprüft worden ist.

2. Bremsanlage nach Anspruch 1, dadurch gekennzeichnet, daß während der Prüfung der Bremsanlage durch die Elektronik (2) eine Vollbremsbetätigung des Bremswertgebers (1) durch den Fahrer vorgesehen ist.

3. Bremsanlage nach Anspruch 2, dadurch gekennzeichnet, daß der Stromkreis zur Ansteuerung des Magnetventils (11) über ein die Betätigung des Handbremsgebers (9, 25) direkt oder indirekt sensierendes Schaltelement (17, 26) geleitet ist.

4. Bremsanlage nach Anspruch 3, dadurch gekennzeichnet, daß das Schaltelement (17) ein Druckschalter ist, der vom ausgesteuerten Druck des Handbremsgebers (9) einschaltbar ist.

5. Bremsanlage nach Anspruch 3, dadurch gekennzeichnet, daß das Schaltelement (26) ein Schalter ist, der die Stellung des Handbremsgebers (25) sensiert.

6. Bremsanlage nach Anspruch 1 bis 5, dadurch gekennzeichnet, daß der Stromkreis zur Ansteuerung des Magnetventils (11) von der Elektronik (2) nach erfolgreicher Prüfung über ein in die Elektronik (2) integriertes Schaltelement (28) oder ein externes Schaltelement (16) geleitet ist.

7. Bremsanlage nach Anspruch 6, dadurch gekennzeichnet, daß für die Schaltelemente (16, 28) eine elektrische Selbsthaltung vorgesehen ist.

8. Bremsanlage nach Anspruch 1 bis , dadurch gekennzeichnet, daß für das Magnetventil (11) eine pneumatische Selbsthaltung (20) vorgesehen ist.

9. Bremsanlage nach Anspruch 1 bis 8, dadurch gekennzeichnet, daß das Magnetventil (11) durch die Elektronik (2) erst dann in eine geöffnete Stellung steuerbar ist, wenn der Zündschalter (15) eingeschaltet ist.

10. Bremsanlage nach Anspruch 1 bis 9, dadurch gekennzeichnet, daß die Elektronik (2) sowohl über den Zündschalter (15) als auch über die Schaltelemente (17, 26) über einen Eingang (23) elektrisch versorgt werden kann.

**Claims**

1. An electrically controlled pressure medium brake system having the following features:

a) an electrical brake pedal transducer (1) for triggering the service brake (5);

b) a hand brake controller (9, 25) for triggering a parking brake which acts by way of a spring-loaded brake (8) and/or the service brake (5);

c) an electronics assembly (2) for controlling the service brake (5) by way of modulators (3);

d) an ignition switch (15) for supplying power to the electronics assembly (2),

characterized by the following features:

e) a solenoid valve (11) is connected upstream of the spring-loaded brake (8);

f) the solenoid valve (11) can only be switched by the electronics assembly (2) into a position supplying the spring-loaded brake (8) with air when the brake system has been successfully checked by the electronics assembly (2).

2. A brake system according to claim 1, characterized in that during the checking of the brake system by the electronics assembly (2), a full brake actuation of the brake pedal transducer (1) by the driver is required.

3. A brake system according to claim 2, characterized in that the circuit for triggering the solenoid valve (11) is controlled by way of a switch circuit (17, 26) directly or indirectly sensing the actuation of the hand brake controller (9, 25).

4. A brake system according to claim 3, characterized in that the circuit element (17) is a pressure switch which can be switched in by the supplied pressure from the hand brake controller (9).

5. A brake system according to claim 3, characterized in that the circuit element (26) is a switch that senses the position of the hand brake controller (25).

6. A brake system according to claims 1 to 5, characterized in that the circuit for triggering the solenoid valve (11) is controlled by the electronics assembly (2) after successful testing by way of a circuit element (28) integrated in the electronics assembly (2) or by way of an external circuit element (16).

7. A brake system according to claim 6, characterized in that an electrical latching circuit is provided for the circuit elements (16, 28).

8. A brake system according to claims 1 to 7, characterized in that a pneumatic latching arrangement (20) is provided for the solenoid valve (11).

9. A brake system according to claims 1 to 8, characterized in that the solenoid valve (11) is switchable by the electronics assembly (2) into an open position only when the ignition switch (15) has been switched on.

10. A brake system according to claims 1 to 9, characterized in that the electronics assembly (2) can be supplied with electric current through an input (23) both by way of the ignition switch (15) and also by way of the circuit elements (17, 26).

**Revendications**

1. Installation de freinage à fluide de pression, commandée électriquement, présentant les caractéristiques suivantes:

a) un générateur électrique de valeur de freinage (1) pour la commande du frein de marche (5);

b) un émetteur de frein à main (9, 25) pour la commande d'un frein de stationnement, qui agit via un accumulateur à ressort (8) et/ou le frein de marche (5);

c) une électronique (2) pour commander le frein de marche (5) via des modulateurs (3);

d) un commutateur d'allumage (5) pour l'alimentation en courant de l'électronique (2), caractérisée par les caractéristiques suivantes:

e) une vanne magnétique (11) est montée en amont de l'accumulateur à ressort (8);

f) la vanne magnétique (11) ne peut être commandée, par l'électronique (2), vers une position d'application d'air comprimé à l'accumulateur à ressort (8), que si l'installation de freinage a été controlée avec succès par l'électronique (2).

2. Installation de freinage selon revendication 1, caractérisée par le fait qu'un actionnement de freinage complet du générateur de valeur de freinage (1), par le conducteur, est prévu pendant le contrôle de l'installation de freinage par l'électronique (2).

3. Installation de freinage selon revendication 2, caractérisée par le fait que le circuit pour la commande de la vanne magnétique (11) passe par un élément de commutation (17, 26) décelant, directement ou indirectement, l'actionnement de l'émetteur de frein à main (9, 25).

4. Installation de freinage selon revendication 3, caractérisée par le fait que l'élément de commutation (17) est un commutateur sensible à la pression, qui peut être mis en condition de fermeture par la pression résultant de la commande par l'émetteur de frein à main (9).

5. Installation de freinage selon revendication 3, caractérisée par le fait que l'élément de commutation (26) est un commutateur qui décèle la position de l'émetteur de frein à main (25).

6. Installation de freinage selon revendication 1 à 5, caractérisée par le fait que le circuit de courant pour commander la vanne magnétique (11) est amené, par l'électronique (2), après contrôle réussi, à passer par un élément de commutation (28) intégré dans l'électronique (2) ou par un élément de commutation externe (16).

7. Installation de freinage selon revendication 6, caractérisée par le fait qu'un auto-maintien électrique est prévu pour les éléments de commutation (16, 28).

8. Installation de freinage selon revendication 1 à 7, caractérisée par le fait qu'un auto-maintien (20) pneumatique est prévu pour la vanne magnétique (11).

9. Installation de freinage selon revendication 1 à 8, caractérisée par le fait que la vanne magnétique (11) ne peut être commandée, par l'électronique (2), vers une position d'ouverture, que si le commutateur d'allumage (15) est fermé.

10. Installation de freinage selon revendication 1 à 9, caractérisée par le fait que l'électronique (2) peut être alimentée électriquement aussi bien par le commutateur d'allumage (15) que par les éléments de commutation (17, 26), via une entrée (23).

FIG. 1

FIG. 2

EP 0 212 074 B1